# EUROPÄISCHE PATENTSCHRIFT

(11) **EP 3 610 245 B1**
(45) Veröffentlichungstag und Bekanntmachung des Hinweises auf die Patenterteilung: **24.09.2025**
(21) Anmeldenummer: 18721675.9
(22) Anmeldetag: 12.04.2018
(51) Int. Cl.: G01N 21/65, G01N 21/41, G01J 3/44, G01N 21/31

(54) **ANALYSEVORRICHTUNG**
ANALYSIS DEVICE
DISPOSITIF D'ANALYSE

(30) Priorität: 13.04.2017 DE 102017108120
(43) Veröffentlichungstag der Anmeldung: 19.02.2020
(73) Patentinhaber: Institut für Nanophotonik Göttingen e.V., 37077 Göttingen (DE)
(72) Erfinder: GUNDRUM, Lars, 37083 Göttingen (DE); BORN, Julian, 37079 Göttingen (DE); WACKERBARTH, Hainer, 34131 Kassel (DE); WANG, Zheng, JiangBei District ChongQing 402000 (CN); DACH, Fabian, 37073 Göttingen (DE)
(74) Vertreter: Winter, Brandl - Partnerschaft mbB
(86) Internationale Anmeldenummer: PCT/DE2018/100347
(87) Internationale Veröffentlichungsnummer: WO 2018/188699

(56) Entgegenhaltungen:
- DE-B3- 102010 023 099
- JP-A- 2005 233 928
- US-A1- 2003 048 432
- US-A1- 2007 201 025
- US-A1- 2010 050 737
- US-A1- 2016 146 722
- PITT G D ET AL: "Engineering aspects and applications of the new Raman instrumentation", IEE PROCEEDINGS: SCIENCE, MEASUREMENT AND TECHNOLOGY, IEE, STEVENAGE, HERTS, GB, vol. 152, no. 6, 1 November 2005 (2005-11-01), pages 241 - 318, XP002483939, ISSN: 1350-2344, DOI: 10.1049/IP-SMT:20050015
- KOMSTA L ET AL: "Chemometric detection of acetaminophen in pharmaceuticals by infrared spectroscopy combined with pattern recognition techniques: comparison of attenuated total reflectance-FTIR and Raman spectroscopy.", JOURNAL OF AOAC INTERNATIONAL, vol. 94, no. 3, May 2011 (2011-05-01), pages 743 - 749, XP009506446, ISSN: 1060-3271

## Beschreibung

Die vorliegende Erfindung betrifft eine, vorzugsweise für den medizinischen Einsatz angepasste, Vorrichtung zur Identifikation von Fluiden, vorzugsweise falscher Wirkstoffe, Wirkstoffkombinationen und/oder Lösungen in Infusionsbehältern, Spritzen/Spritzenpumpen und dergleichen Zuführeinrichtungen, welche nachfolgend auch als Analysevorrichtung bezeichnet wird. Des Weiteren betrifft die vorliegende Erfindung ein Verfahren zur Identifikation von Fluiden, vorzugsweise falscher Wirkstoffe, Wirkstoffkombinationen und/oder Lösungen in Infusionsbehältern, Spritzen/Spritzenpumpen und dergleichen Zuführeinrichtungen insbesondere unter Einsatz der erfindungsgemäßen Analysevorrichtung.

### Technischer Hintergrund der vorliegenden Erfindung

Die vorliegende Erfindung befasst sich mit der Entwicklung einer (Fluid-) Analysevorrichtung insbesondere (jedoch nicht ausschließlich) für den medizinischen Einsatz. Die Analysevorrichtung soll eine fehlerhafte Infusionslösung, beispielsweise ein in eine Medikamenten-Zuführeinrichtung eingezogenes/eingesetztes Medikament, unter Vergleich mit einem in einer Datenbank hinterlegten vordefinierten Medikamentensortiment, bestimmt zur intravenösen Verabreichung an einen Patienten, erkennen und anzeigen. Unter einer Infusionslösung fallen somit auch Medikamente die mittels einer Spritzenpumpe verabreicht werden. Die Analysevorrichtung kombiniert hierbei zwei Messverfahren, nämlich
- die Raman-Spektroskopie und
- die Refraktometrie,

um ein möglichst breites Analysespektrum von Fluiden abzudecken. Die Refraktometrie ist dabei notwendig, um Fluide wie NaCl- oder KCI-Lösungen zu unterscheiden, da dies mittels Raman-Spektroskopie nicht möglich ist.

In vielen Bereichen des täglichen Lebens ist die Analyse von Fluiden notwendig. Vor allem in der Medizin, bei der Fehler in der Verabreichung ernstzunehmende Konsequenzen für einen Patienten haben können.

Es existieren bereits Möglichkeiten zum Identifizieren von Substanzen in Fluiden und zum Ermitteln der Konzentration dieser Substanzen. Ein Großteil dieser Möglichkeiten verwendet dafür Vorrichtungen bei denen ein Sensor in direktem bzw. unmittelbarem Kontakt mit einem zu messenden Fluid steht oder durch ein Verfahren mit einem zu messenden Fluid in direkten bzw. unmittelbaren Kontakt gebracht wird. Das heißt, entweder muss sich der Sensor dauerhaft in einem Fluidweg befinden, oder es muss etwas von dem Fluid entnommen und einem Sensor oder einer Analysevorrichtung zugeführt bzw. ein Sensor in das Fluid eingebracht werden. Bei einem direkten Kontakt der Sensoren mit einem Fluid müssen zwischen den Messungen die Sensoren jedes Mal gereinigt oder sogar ausgewechselt werden und bei einer Fluidentnahme wird ein Fluidbetrag aus einem vordefinierten Volumen entfernt. Um dies zu vermeiden werden bevorzugt kontaktlose Messsysteme eingesetzt, die nicht direkt in Kontakt mit dem zu messenden Fluid stehen. Deshalb bieten Systeme, die mit elektromagnetischer Strahlung arbeiten, hier einen Ausweg. Besonders optische Systeme sind somit für die Analyse von Fluiden geeignet, da sie eine berührungslose Möglichkeit bieten, Fluide zu analysieren und vernachlässigbaren Einfluss auf die Probe nehmen.

Optische Verfahren für die Diagnostik sind in der Medizin unabkömmlich, vor allem da sie nicht-invasive (kontaktlose) oder minimal-invasive Verfahren zur Untersuchung von Fluiden bereitstellen. In solchen Untersuchungsverfahren wird die Wechselwirkung von Licht mit Materie, genauer gesagt mit medizinischen Fluiden genutzt, um Informationen über die Zusammensetzung und Konzentration des Fluids zu erhalten. Dabei wird Laserlicht oder Licht mit einem breiten Spektrum auf die Materie eingestrahlt und das transmittierte oder rückgestreute Licht gemessen. In anderen Worten erlaubt ein optisches Verfahren eine zerstörungsfreie, nicht-invasive Messung ohne aufwendige Probenvorbereitung.

Die Refraktometrie ist eine optische Messmethode, die sich mit der Bestimmung des Brechungsindex (auch Brechungszahl, Brechungsverhältnis, Brechungsexponent oder Brechzahl genannt) von Materie beschäftigt. Bei einer Methode zur Bestimmung des Brechungsindex wird die Ablenkung eines Lichtstrahles bei dem Übergang von einem ersten Medium in ein zweites Medium erfasst. Die Ablenkung des Lichtstrahles gibt dabei Rückschlüsse über das zweite Medium, sofern das erste Medium bekannt ist. Bei einer weiteren Methode zur Bestimmung des Brechungsindex, wird die Totalreflexion, welche beim Übergang von Licht zwischen einem Medium mit höheren Brechungsindex zu einem Medium mit geringerem Brechungsindex ab einem gewissen Winkel stattfindet, ermittelt. Auch bei dieser Methode lässt sich, solange der Brechungsindex des einen Mediums bekannt ist, der Brechungsindex des zweiten Mediums bestimmen. Die Refraktometrie nutzt also den Brechungsindexunterschied zwischen zwei Medien. Dabei ist auch noch zu beachten, dass der Brechungsindex n von der Wellenlänge der verwendeten Lichtquelle und von der Temperatur des Mediums abhängig ist. Wenn die Zusammensetzung eines Fluids bekannt ist, kann ein Refraktometer beispielsweise dazu benutzt werden, die Konzentration der jeweiligen Bestandteile des Fluids anhand des Brechungsindex zu ermitteln, sofern es neben der Trägerlösung nur eine einzige weitere gelöste Komponente gibt.

Die Raman-Spektroskopie ist eine spektroskopische Untersuchung der inelastischen Streuung von Licht an Molekülen oder Festkörpern. Dabei wird die zu untersuchende Materie mit Licht (monochromatisches Licht, Laserstrahlung) bestrahlt und das gestreute Licht wird, vorzugsweise wellenlängenselektiv, detektiert und ausgewertet. In dem an der Materie gestreuten Licht werden neben der Anregungsfrequenz noch weitere Frequenzen detektiert. Die Frequenzunterschiede zwischen eingestrahltem Licht und gestreutem Licht geben Rückschlüsse über die bestrahlte Materie. Ein Vorteil der Raman-Spektroskopie ist, dass eine einfache Messung aller Aggregatszustände möglich ist, aber vor allem, dass wässrige Lösungen untersucht werden können. Da in der Regel der Durchmesser des anregenden Laserstrahles sehr gering ist, benötigt die spektroskopische Untersuchung nur kleinste Probemengen. Raman-Spektren enthalten viele Informationen, die durch die Auswertung Rückschlüsse auf eine Substanz, vorzugsweise die Struktur und Bindung, und somit auf die detektierten Moleküle, zulassen.

Medizinische Fluide werden einem Patienten oftmals mittels verschiedener Medikamentenversorgungsvorrichtungen bzw. Infusionslösungsversorgungsvorrichtungen (z.B. Spritzenpumpen) verabreicht, zum Beispiel bei der Dialyse oder wenn der Patient eine stetige und dauerhafte Medikamentenzufuhr benötigt. Dabei kann das Fluid ein Medikament bzw. eine Infusionslösung sein, ein gelöstes Medikament oder eine Lösung. Die richtige Zusammensetzung und die richtige Konzentration des Medikaments bzw. der Infusionslösung werden vom Arzt verordnet. Abweichungen davon können zu gesundheitlichen Schäden führen.

Unter einer Zuführeinrichtung (auch Medikamentenversorgungseinheit bzw. Infusionslösungsversorgungseinheit) sind Vorrichtungen zu verstehen, die einem Patienten ein Medikament bzw. eine Infusionslösung zuführen, z.B. Spritzenpumpen. Spritzenpumpen (Perfusoren) sind Dosierpumpen zur intravenösen Verabreichung von Medikamenten bzw. Infusionslösung. Sie erlauben eine einstellbare Dosierung bzw. Dosierrate von Medikamenten bzw. Infusionslösung während einer Dauerbehandlung. Die Dosierung bzw. Dosierrate dieser Spritzenpumpen beträgt in der Regel zwischen 0,1 ml/h bis 99,9 ml/h. Bei der Medikamentenverabreichung bzw. Infusionslösungsverabreichung an einen Patienten ist es dabei oftmals der Fall, dass eine Vielzahl von Spritzenpumpen übereinander und parallel angeordnet sind.

### Stand der Technik

Die EP1295107, betrifft eine Vorrichtung für die kombinierte und gleichzeitige Benutzung mehrerer physikalischer Messmethoden - beispielsweise der Polarimetrie, Spektroskopie, Refraktometrie, Leitfähigkeitsmessung, Oximetrie, pH-Wert-Messung und der ATR-Spektroskopie (ATR: ,attenuated total reflection") - zur Analyse insbesondere niedrig konzentrierter Komponenten in einem flüssigen Mehrstoffgemisch, insbesondere in miniaturisierbarer Form. Der gemeinsame Messstrahl für eine gleichzeitige refraktometrische und ATR-spektroskopische Messung, der in den Reflexionskörper eingestrahlt und innerhalb des Reflexionskörpers durch Totalreflexionen geführt wird, tritt mit dem Messgut an der Grenzschicht der beiden Medien in Wechselwirkung.

Die EP2470063, offenbart eine Vorrichtung und Verfahren zur Bestimmung der osmotischen Konzentration insbesondere zum Diagnostizieren eines "trockenen Auges" bei Patienten. Genauer gesagt betrifft die EP2470063 eine Vorrichtungen und ein Verfahren zur Analyse von Tränenflüssigkeitsproben, um die osmotische Konzentration der Tränen zu bestimmen, mittels der Salinität, und der Proteinkonzentration in der Tränenflüssigkeit, die Indikatoren von trockenen Augen sind. Das Spektrophotometersystem und das Refraktometersystem teilen sich ein Prisma, wobei das Prisma eine Prismenoberfläche hat, durch die es in Kontakt mit der Tränenprobe gebracht wird. Das Spektrophotometersystem weist eine Lichtquelle, beispielsweise eine UV-Licht emittierende Diode und einen entsprechenden Lichtdetektor auf, um transmittiertes Licht zu empfangen. Das Refraktometersystem weist eine Lichtquelle und eine Optik auf, die angeordnet sind, um eine Schnittstelle zwischen der Prismenoberfläche und der Tränenprobe zu beleuchten.

Auch die EP1882446, beschäftigt sich mit der Messung eines Analyten in einer Augenflüssigkeit. Hierfür ist ein Handmessgerät zur Messung mindestens eines Analyten in der Augenflüssigkeit sowie ein analytisches Messsystem vorgesehen. Weiterhin betrifft diese Veröffentlichung ein Verfahren zur Bestimmung einer Konzentration mindestens eines Analyten in einer Körperflüssigkeit, welches das analytische Messsystem einsetzt. Derartige Handmessgeräte, analytische Messsysteme und Verfahren werden beispielsweise zur Bestimmung von Blutglukosekonzentration eingesetzt. So weist das bekannte Messsystem vorzugsweise mindestens eines der folgenden Systeme auf: ein Infrarot (IR)-spektroskopisches Messsystem, ein Nah-Infrarot (NIR)-spektroskopisches Messsystem, ein Ramanspektroskopisches Messsystem, ein UV/sichtbar (UV/VIS)-spektroskopisches Messsystem, ein Fluoreszenzmesssystem, ein Impedanz-Messsystem, ein photoakustisches Messsystem, ein zirkular-dichroitisches Messsystem, ein refraktometrisches Messsystem und ein interferometrisches Messsystem.

Schließlich offenbart die EP1545659, eine Vorrichtung und Verfahren zur qualitativen und quantitativen Bestimmung von intravenösen Flüssigkeitskomponenten insbesondere unter Nutzung der Spektroskopie. Spektroskopie kann zur Bestimmung der Fluidpfadkomponenten in intravenösen Infusionen angewendet werden, um das Auftreten von Medikationsfehlern verhindern. Vorzugsweise wird die Analyse durchgeführt, durch Bereitstellen einer EMR-Emissionsquelle und eines Detektors auf der gegenüberliegenden Seite eines Fluidwegs, obwohl auch andere Systeme, wie Raman oder Reflexion verwendet werden können.

Die US 2007/201025 A1 offenbart eine Vorrichtung und ein Verfahren zur Überprüfung der Zusammensetzung einer medizinischen Flüssigkeit in einem Flüssigkeitsbehälter. Die US 2016/146722 A1 offenbart eine Vorrichtung zur spektroskopischen Ellipsometrie.

Die US 2003/048432 A1 offenbart die Vorrichtung und Verfahren zum Bestimmen mindestens eines Parameters, z.B. der Konzentration, mindestens eines Analyten, z.B. Harnstoff, einer biologischen Probe und Urin.

Die DE 10 2010 023099 B3, den Artikel von PITT G D ET AL mit dem Titel "Engineering aspects and applications of the new Raman instrumentation" und den Artikel von KOMSTA LET AL mit dem Titel "Chemometric Detection of Acetaminophen in Pharmaceuticals by Infrared Spectroscopy Combined with Pattern Recognition Techniques: Comparison of Attenuated Total Reflectance-FTIR and Raman Spectroscopy" sind auch als relevanter Stand der Technik anzusehen.

Obgleich aus dem Stand der Technik unterschiedliche Ansätze zur Identifikation von Fluiden oder Fluidkomponenten entwickelt wurden, die u.a. auch die Kombination verschiedener Messmethoden wie verschiedene Spektroskopieverfahren und die Refraktometrie vorsehen, so ist es bisher nicht, oder nur unzureichend möglich, falsche Fluide/Wirkstoffe/Wirkstoffkomponenten zu identifizieren und deren Verabreichung zu verhindern.

### Kurzbeschreibung der Erfindung

Die Erfindung wird durch die nachfolgenden Ansprüche definiert.

Angesichts dieser Sachlage ist es die Aufgabe der vorliegenden Erfindung eine, vorzugsweise für den medizinischen Einsatz angepasste, Vorrichtung zur Identifikation von Fluiden (Substanzen), vorzugsweise falscher Wirkstoffe, Wirkstoffkombinationen und/oder Lösungen (Infusionslösungen), weiter vorzugsweise in Infusionsbehältern, Spritzen/Spritzenpumpen und dergleichen Zuführeinrichtungen (nachfolgend der Einfachheit halber als "Analysevorrichtung" bezeichnet) sowie ein entsprechendes Analyseverfahren bereitzustellen, wodurch ein falsches Fluid/Wirkstoff/Wirkstoffkomponente/Substanz identifizierbar ist. Dabei soll kein direkter Kontakt mit dem zu messenden Fluid zwischen einem Sensor und dem Fluid zustande kommen, in anderen Worten ausgedrückt, soll weder das Verfahren, noch die Vorrichtung invasiv sein. Neben der Identifizierung der Bestandteile (Komponenten) des Fluids soll auch die Konzentration der einzelnen Bestandteile ermittelt werden können. Zum Beispiel soll durch die Identifizierung des Fluids, speziell im medizinischen Bereich, eine fehlerhafte Verabreichung von Medikamenten oder Infusionslösungen verhindert werden, wobei unter einer Infusionslösung auch Medikamente, gelöste Medikamente oder dergleichen verstanden werden können. Des Weiteren ist es eine weitere Aufgabe der Erfindung, eine günstige Herstellung einer Vorrichtung mit Raman-Spektroskopie und Refraktometrie zu ermöglichen, die eine hohe Messgenauigkeit aufweist.

Diese Aufgabe wird durch eine Analysevorrichtung mit den Merkmalen des Anspruchs 1 sowie einem Analyseverfahren mit den Verfahrensschritten gemäß Anspruch 4 gelöst. Vorteilhafte Ausgestaltungen der Erfindung sind Gegenstand der Unteransprüche.

Der Kern der Erfindung besteht demzufolge in der erfindungsgemäßen Art und Weise der Kombination der Raman-Spektroskopie und der Refraktometrie bzw. die integrierte Anwendung der beiden Messverfahren in einem einzigen Gerät bzw. in einer einzigen Vorrichtung. Dabei ermittelt die Vorrichtung die Raman-Spektren des zu messenden Fluids, den Brechungsindex und vorzugsweise die Temperatur. Die Ergebnisse der Messungen werden zur Identifikation des gemessenen Fluids verwendet, genauer gesagt zur Klassifikation und zur Messung der Konzentration. In anderen Worten ausgedrückt werden die Bestandteile des Fluids und deren Konzentration ermittelt. Beide Messungen werden parallel und/oder seriell durchgeführt. Anschließend wird das Raman-Ergebnis ausgewertet und unterschieden in Raman-aktiv oder Raman-inaktiv.

Die Kombination der Raman-Spektroskopie und der Refraktometrie in einem einzigen Gerät bzw. einer einzigen Vorrichtung wird dadurch erreicht, dass das Gerät bzw. die Vorrichtung ein Raman-Spektrometer und ein Refraktometer aufweist.

Die Erkennung, ob Raman-Banden im Spektrum vorhanden sind, umfasst das Berechnen der ersten Ableitung des Raman-Spektrums anhand eines Algorithmus auf einer internen und/oder auf einer externen Recheneinheit (Prozessor). Dazu wird das Raman-Spektrum im Allgemeinen basislinienkorrigiert und/oder anschließend mit verschiedenen Methoden verarbeitet oder umgewandelt, z.B. der FourierTransformation, der Wavelet-Transformation oder der Differenzierungsmethode. Die lokalen Maxima der bearbeiteten Raman-Spektren, welche höher als ein definierter Schwellenwert sind, werden durchsucht. Falls mindestens ein lokales Maximum vorliegt, ist eine Raman-aktive Substanz vorhanden. Liegt kein lokales Maximum vor wurde eine Raman-inaktive Substanz ermittelt. Bei der Ermittlung der Raman-aktiven Substanzen kann das Rauschen, vorzugsweise durch das Einstellen eines vorbestimmten Schwellwertes, unterdrückt werden (z.B. durch den Einsatz eines Rauschfilters). Somit ermittelt/unterscheidet die Analysevorrichtung in einem (Vor-) Ergebnis, ob in dem Fluid Raman-aktive und/oder Raman-inaktive Substanzen vorhanden sind und klassifiziert/überprüft danach oder parallel dazu das (Vor-) Ergebnis nach dem Brechungsindex-Verfahren um zu einem bestätigten Endergebnis zu kommen.

Für den Fall eines Raman-aktiven (Vor-) Ergebnisses (d.h. die Raman-Spektroskopie liefert ein vergleichsfähiges/verwertbares Ergebnis) dient das parallel und/oder seriell angewandte Brechungsindex-Verfahren somit zur Plausibilitätsüberprüfung des (Vor-) Ergebnisses, um anschließend zu einem bestätigten Endergebnis zu kommen. Für den Fall eines Raman-inaktiven (Vor-) Ergebnisses (die Raman-Spektroskopie liefert kein vergleichsfähiges/verwertbares Ergebnis), dient das parallel und/oder seriell angewandte Brechungsindex-Verfahren somit zur Bereitstellung eines bestätigten Endergebnisses. Das Brechungsindex-Verfahren gemäß der Erfindung nutzt vorzugsweise das Prinzip der Totalreflexion.

Im Fall, dass nur Raman-aktive Substanzen als bestätigtes Endergebnis erkannt werden, werden die ermittelten Raman-Banden mit einer internen und/oder externen Raman-Datenbank verglichen. Dieser Vergleich ermöglicht eine Identifikation der Substanz und/oder eine Konzentrationserkennung der Substanz. Alternativ kann davor noch eine Gewichtung der Qualität des Raman-Spektrums durchgeführt werden. Danach erfolgt eine Datenfusion zu einem Endergebnis.

Für den Fall, dass beides, Raman-aktive und Raman-inaktive Substanzen als bestätigtes Endergebnis festgestellt werden, ist das Vorgehen analog zur Raman-aktiven Substanz. Die ermittelten Raman-Banden werden mit einer internen und/oder externen Raman-Datenbank verglichen und zusätzlich wird nun auch der Brechungsindex mit einer internen und/oder externen Brechungsindex-Datenbank verglichen. Diese Vergleiche ermöglichen eine Identifikation der Substanz und/oder eine Konzentrationserkennung der Substanz. Somitbeinhaltet dieser Schritt eine zusätzliche Klassifizierung auf Wasser, NaCl oder KCl. Bei der Überprüfung des Brechungsindex wird die Datenbankabfrage somit auf Raman-inaktive Substanzen wie Wasser, NaCl und KCI erweitert.

Im Fall, dass nur Raman-inaktive Substanzen als bestätigtes Endergebnis festgestellt werden, erfolgt eine Einschränkung der Substanzen auf Wasser, NaCl oder KCI zur Klassifizierung. Nach einem Vergleich mit der Brechungsindex-Datenbank erfolgt die Qualifizierung und Quantifizierung der Substanz, was auch wieder zu einem Endergebnis führt.

In allen Fällen wird das so erhaltene Endergebnis mit Daten in einer vorab erzeugten/aufgebauten Datenbank verglichen, die entsprechend vergleichbare Datensätze von normalerweise verabreichten Fluiden/Wirkstoffen/Wirkstoffkomponenten enthält. In anderen Worten wird das Endergebnis, das eine Identifikation der Substanz und der Konzentration der Substanz darstellt, mit einem hinterlegten Datensatz verglichen. Im Falle einer fehlenden Übereinstimmung wird das zu analysierende Fluid/Wirkstoff/Wirkstoffkomponente als "Falsch" bewertet und ein entsprechender Alarm ausgelöst bzw. Signal ausgegeben und/oder weitergeleitet und/oder dessen Verwendung gestoppt. Wird eine zu analysierende Fluid/Wirkstoff/Wirkstoffkomponente als "Richtig" bewertet wird ein entsprechendes Signal ausgegeben und oder weitergeleitet. In anderen Worten wird an dem Gerät, einem Touchscreen und oder einer Krankenhaus-EDV bzw. einem Krankenhausinformationssystem (KIS) eine Meldung übermittelt.

In einer vorteilhaften Ausführungsform wird das Ergebnis der Brechungsindex-Messung mit entsprechenden Funktionen des Brechungsindex, die kompensierend für die vorherrschende Temperatur sind, für die einzelnen Substanzen/Mischungen abgeglichen, nachdem eine Temperatur des zu messenden Fluids mittels eines Temperatursensors ermittelt wurde. Das Ergebnis kann als Eintrag und als ein Fehler zwischen gemessenem Brechungsindex und theoretischem Brechungsindex ausgegeben werden.

Das Endergebnis kann in einer vorteilhaften Ausführungsform durch eine Datenfusion durch den Abgleich zwischen Refraktometer-Ergebnis für die Konzentrationsbestimmung und Raman-Ergebnis für die Konzentrationsbestimmung zustande kommen. Die Abweichungen der jeweilig berechneten Vektorkomponente eines Ergebnisvektors aus dem quantitativen Raman-Ergebnis ergeben den Fehler, der gewichtet und mit dem Fehler des Abgleichs des Brechungsindex auf Verlässlichkeit verglichen und überprüft wird. In Abhängigkeit der Einzelfehler werden Konfidenzintervalle festgelegt. Für den Fall, dass sich beide Messungen außerhalb der Konfidenzintervalle der jeweils anderen Messung befinden, wird ein Fehler/Alarm ausgegeben.

In anderen Worten ausgedrückt ist es erfindungsgemäß vorgesehen, dass Fluide, Lösungen, Wirkstoffe oder Wirkstoffkombinationen die nicht Raman-aktiv sind, auf Basis einer einfachen Brechungsindex-Messung (vorzugsweise eine Wellenlänge) eindeutig identifiziert werden. Dabei wird ausgenutzt, dass gemäß Messaufgabe Raman-inaktive Lösungen nur in wenigen definierten Konzentrationen vorkommen, derart, dass auch unter Berücksichtigung typischer Messunsicherheiten eine eindeutige Zuordnung eines Messwertes zu einer zugehörigen Lösung möglich ist. In allen anderen Fällen von Raman-aktiven Fluiden, Lösungen, Wirkstoffen oder Wirkstoffkombinationen wird die Brechungsindex-Messung zum Plausibilitätscheck der per Raman-Spektroskopie erhaltenen Messergebnisse herangezogen, um so die Messsicherheit weiter zu erhöhen.

Ein alternatives oder zusätzliches Verfahren beim Anschließen einer Infusionslösung in einer Spritzenpumpe gestaltet sich wie folgt. Als erstes wird die Pumpe gestartet, die bereits befüllte Spritze eingelegt und der Infusionsschlauch angeschlossen. Anschließend wird das jeweilige Anwendungsprofil (z.B. Insulin oder KCI) ausgewählt und gestartet. Die Pumpe beginnt mit dem Pumpenvorlauf. Diese Information wird an die Analysevorrichtung weitergeleitet und diese beginnt mit den Brechungsindexmessungen. Die Durchflussmesszelle ist so konstruiert, dass das optische Fenster für die Brechungsindexmessungen oberhalb des optischen Fensters für die Raman-Messungen ist. Der Eingang der aufrecht stehenden Durchflussmesszelle ist an deren Unterseite, um zu vermeiden, dass sich beim Befüllen Luftblasen in der Durchflussmesszelle sammeln können. Da zu Beginn der Messungen die Durchflussmesszelle leer ist, bedeutet eine Änderung im Brechungsindex, dass die Durchflussmesszelle gefüllt ist. Der Analyseautomat gibt als nächstes einen Befehl an die Spritzenpumpe, aus den Pumpenvorlauf zu verlangsamen oder zu stoppen, bis die Raman-Messung zu einem Ergebnis gekommen ist. Bei einer positiven Auswertung des Messergebnisses wird der Pumpenbetrieb normal weitergeführt. Bei einer negativen Auswertung wird eine entsprechende Warnung ausgegeben.

### Kurzbeschreibung der Figuren

Die Erfindung wird nachstehend anhand eines bevorzugten Ausführungsbeispiels unter Bezugnahme auf die begleitenden Figuren näher erläutert.
Fig. 1. zeigt einen prinzipiellen Aufbau einer Analysevorrichtung gemäß einem bevorzugten Ausführungsbeispiel der vorliegenden Erfindung,
Fig. 2. zeigt den schematischen Datenaustausch zwischen der Recheneinheit der Analysevorrichtung und dem Raman-Spektrometer, Refraktometer sowie Temperatursensor,
Fig. 3. zeigt ein Diagramm für eine Fluid-, Wirkstoff-, Wirkstoffkombinations-Analyse gemäß der vorliegenden Erfindung, vorzugsweise unter Verwendung der Analysevorrichtung gemäß Fig. 1,
Fig. 4. zeigt ein Beispiel für detaillierte Verfahrensschritte der Analysevorrichtung gemäß Fig. 1,
Fig. 5. zeigt eine beispielhafte Tabelle auswählbarer Substanzen/Wirkstoffen geordnet nach Raman-aktiv und Raman-inaktiv, und
Fig. 6. bis Fig. 8 zeigen unterschiedliche Varianten für die Anordnung der Analysevorrichtung gemäß Fig. 1 in einem Analysekreislauf.

### Figurenbeschreibung

Die folgende Beschreibung betrifft ein bevorzugtes Ausführungsbeispiel eines erfindungsgemäßen Analyseautomaten/Analysevorrichtung 1, konzipiert für den medizinischen Einsatz zur Erkennung falscher Fluide, Lösungen, Wirkstoffe oder Wirkstoffkombinationen, die über eine Zuführeinrichtung 2 einem Patienten zugeführt werden sollen. Insbesondere wird nachfolgend eine Möglichkeit beschrieben, Infusionen bei der Verabreichung, beispielsweise durch die Zuführeinrichtung 2, zu identifizieren oder nach dem Ausschlussverfahren zumindest zu erkennen, dass die Infusion nicht einem vorbestimmten Infusionssortiment zugehörig ist.

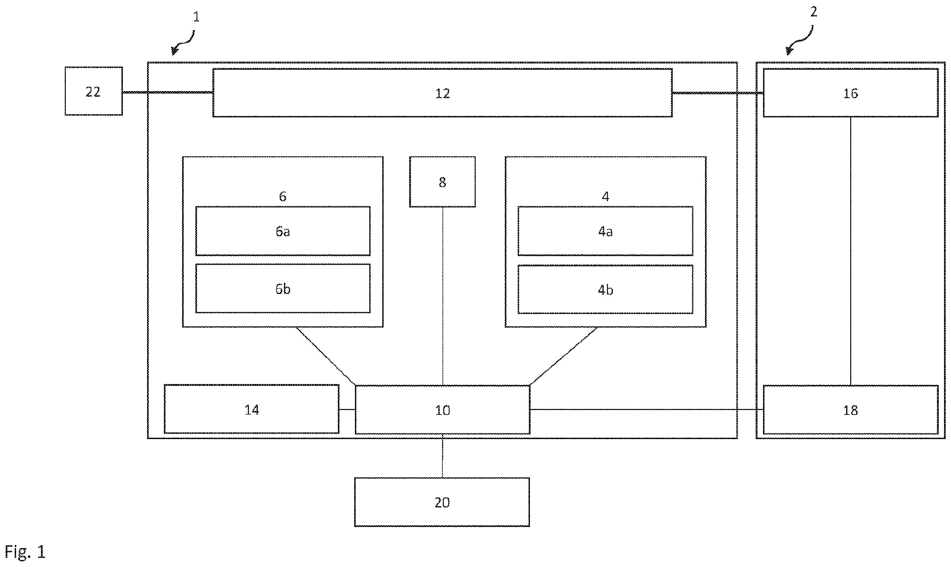

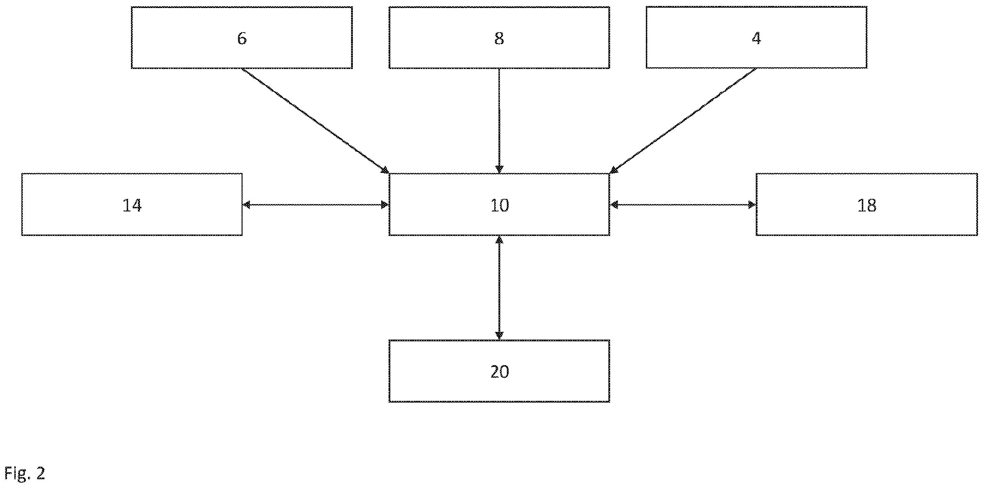

In Fig. 1 und 2 ist ein schematischer Aufbau der Analysevorrichtung 1 in Kombination mit einer Zuführeinrichtung 2 dargestellt. Dabei weist die Analysevorrichtung 1, vorzugsweise in einem einzigen (nicht weiter dargestellten) Gehäuse, ein Raman-Spektrometer 4 zum Messen eines Ramanspektrums, ein Refraktometer 6 zum Messen eines Brechungsindex, einen Temperatursensor 8, eine Recheneinheit (Prozessor/ Zentralrechner) 10 zur Verarbeitung von gemessenen Signalen, eine Durchflussmesszelle 12, an der die Messungen vorgenommen werden können und vorzugsweise ein Interface 14 auf. Die Zuführeinrichtung 2 hat dabei eine Spritzenpumpe 16 und vorzugsweise eine eigene Recheneinheit (Prozessor) 18. Die eigene Recheneinheit 18 der Zuführeinrichtung 2 ist dabei vorzugsweise mit der Recheneinheit (Prozessor) 10 der Analysevorrichtung 1 und/oder direkt mit einer krankenhausinternen EDV 20 verbunden. Das zu analysierende Fluid wird von der Zuführeinrichtung 2 (genauer gesagt der Spritzenpumpe 16) der Analysevorrichtung 1 zugeführt und von dieser dann an einen Patienten 22 weitergeleitet. Dabei erfolgt die Fluidzufuhr über eine Schlauch-/Rohrleitung, die für den Transport von Medikamenten bzw. Infusionslösung geeignet ist. In der Analysevorrichtung 1 fließt das zu messende Fluid durch die Durchflussmesszelle 12, die als Einweg- oder Mehrwegartikel konzipiert sein kann.

Demzufolge sieht die Erfindung bevorzugt eine Kopplung aus dem Raman-Spektrometer 4, beispielsweise bestehend aus einer Lichtquelle 4a, vorzugsweise einer Laser-Lichtquelle, einem Spiegel, einer dem Spiegel gegenüberliegenden Linse, einem der Linse nachgeordneten Monochromator und einem Detektor 4b, vorzugsweise einem CCD-Chip, und dem Refraktometer 6, beispielsweise bestehend aus einer Lichtquelle 6a, vorzugsweise einer Laserlichtquelle, einer der Lichtquelle nachfolgenden Linse, einem der Linse nachfolgendem Prisma und einem dem Prisma nachgeschalteten Detektor 6b , vorzugsweise einem CCD-Chip, vor. Beide Messvorrichtungen, deren prinzipieller Aufbau zum allgemeinen bekannten Stand der Technik zählen und damit dem allgemeinen Fachwissen eines Durchschnittsfachmanns zugeordnet werden können, sind an der mit der Zuführeinrichtung 2 hydraulisch verbundenen Durchflussmesszelle 12 angeordnet und liefern Einzelergebnisse, die nach Datenfusion, entsprechend dem nachfolgend beschriebenen Verfahren, in dem Zentralrechner/Recheneinheit (Prozessor) 10 zu einem Endergebnis zusammengefasst werden, das wiederum mit einer, vorzugsweise in der Analysevorrichtung 1 enthaltenen, Spektren- und Brechungsindex-Datenbank abgeglichen wird, die an die Recheneinheit (Prozessor) 10 angeschlossen ist. Das Ergebnis dieses Abgleichs wird als Gesamtergebnis an die medizinische Dateninfrastruktur (z.B. eine krankenhausinterne EDV/ Krankenhaus EDV, ein Krankenhausinformationssystem KIS und/oder ein Patientendateimanagementsystem PDMS) 20 und/oder an ein Interface 14 und/oder an ein Rettungsmittel ausgegeben. Vorzugsweise ist das Interface 14 ein Touchscreen (berührungsempfindlicher Bildschirm). Die Ausgabe von Qualität und Quantität kann eigens durch die Vorrichtung erfolgen (integrierte Datenbank). Es kann aber auch bei Einbindung in die krankenhausinterne EDV 20 ein Abgleich des Gesamtergebnisses oder auch des Endergebnisses mit dieser erfolgen (externe Datenbank beispielsweise über Internet anschließbar).

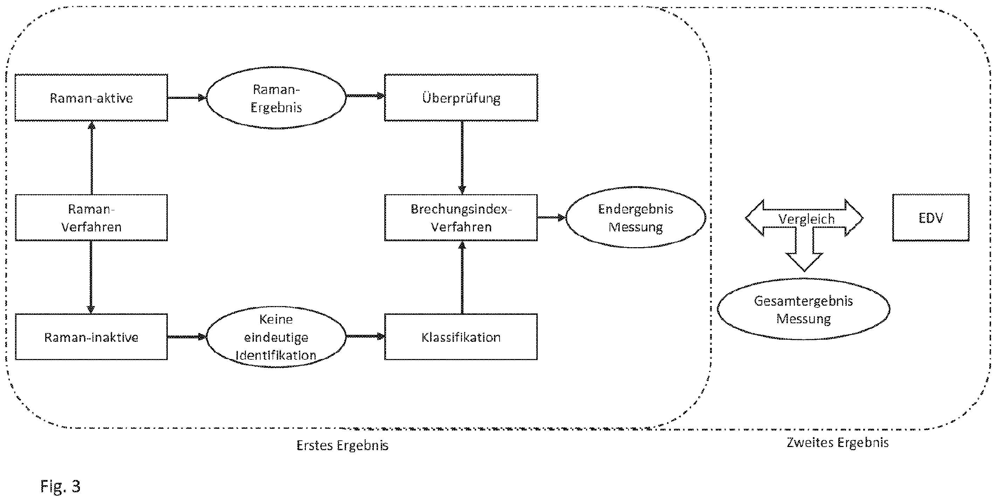

Die Medikamente oder Wirkstoffe, welche u.a. auch in Lösungen vorliegen, werden innerhalb der Durchflussmesszelle 12 Raman-spektroskopisch und refraktometrisch (seriell) analysiert. Die Ergebnisse der beiden Messverfahren werden, wie in Fig. 3 dargestellt, miteinander kombiniert und mit der Spektren- und Brechungsindex-Datenbank abgeglichen. Dies stellt dann ein Zwischenergebnis dar, welches durch die Analysevorrichtung 1 ausgegeben wird. Die Ausgabe des erweiterten Gesamtergebnisses erfolgt abschließend nach Abgleich des Zwischenergebnisses (als Name: Gesamtergebnisses oder auch Endergebnisses vgl. voriger Absatz) mit der Krankenhaus-EDV 20. Die Analyse ist jedoch nicht auf die serielle Ausführung beschränkt, sondern kann des Weiteren alternativ oder zusätzlich parallel erfolgen.

Viele Medikamente/Wirkstoffe/Wirkstoffkomponenten sind prinzipiell allein mittels der Raman-Spektroskopie detektierbar. Allerdings können wässrige Lösungen von NaCl und KCI nicht ohne weiteres durch die Raman-Spektroskopie unterschieden werden. Diesen Nachteil kann die Refraktometrie ausgleichen. Damit sind die in der Medizin eingesetzten, standardisierten wässrigen Lösungen von NaCl und KCI eindeutig voneinander unterscheidbar.

Die Algorithmen der Auswertung der Raman-Spektren erkennen, vorzugsweise mittels Peakanalyse mit anschließendem Abgleich mit einer internen und/oder externen Datenbank, die Zusammensetzung und Menge an Medikament/Wirkstoff in der Lösung. Das Ergebnis der Raman-Messung ermöglicht für Raman-aktive Substanzen/Wirkstoffe eine Qualifizierung und Quantifizierung. Die Refraktometrie dient in diesem Fall der Verifizierung des Raman-Ergebnisses. Das Ergebnis der Quantifizierung wird gleichzeitig verifiziert und optimiert.

Für Raman-inaktive Substanzen/Wirkstoffe ist dies nicht direkt möglich. Hier obliegt die Qualifizierung und Quantifizierung alleine der Refraktometrie. In diesem Fall findet eine Klassifizierung nur durch die Refraktometrie (ohne Verifizierung durch ein weiteres Messverfahren) statt.

Das Ergebnis der Messungen nach den beiden genannten Messverfahren wird mit einer Spektren- und Brechungsindex-Datenbank abgeglichen. Dieses Zwischenergebnis kann durch die Analysevorrichtung ausgegeben werden, wie dies vorstehend bereits ausgeführt wurde. Das Ergebnis des Vergleichs kann aber auch mit der Krankenhaus-EDV 20 abgeglichen werden und als erweitertes Ergebnis ausgegeben werden.

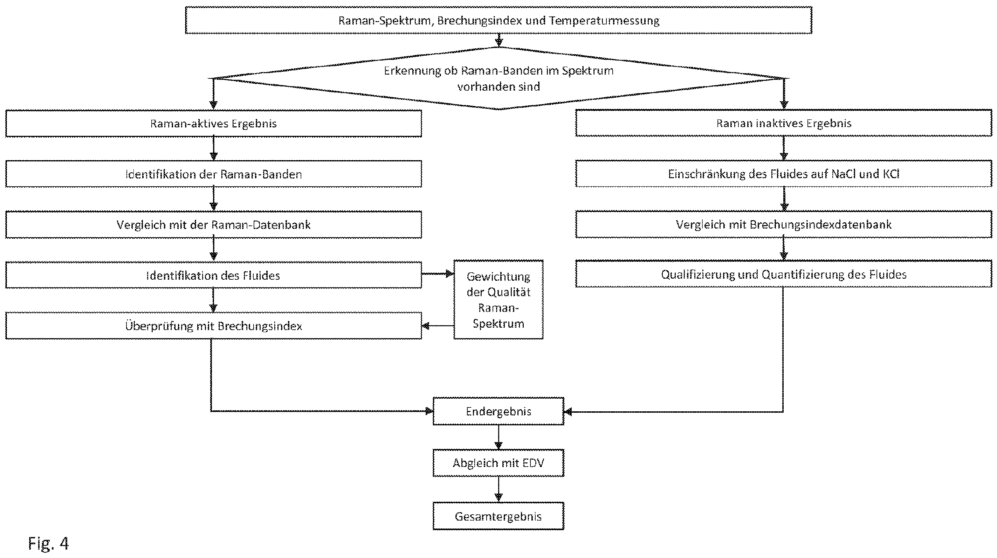

Die Handhabung der Analysevorrichtung 1 im praktischen Einsatz gestaltet sich vergleichsweise einfach:
In der Regel klemmen medizinische Fachkräfte die Durchflussmesszelle 12 in die Analysevorrichtung 1 ein. Die beiden beschriebenen Messeinrichtungen vermessen gemäß der Fig. 4 die Medikation und gleichen sie nach der Auswertung und Datenfusion mit der (internen) Spektren- und Brechungsindex-Datenbank ab. Das daraus resultierende Zwischenergebnis kann direkt an einem Interface 14 ausgegeben werden. Es kann aber auch im Vergleich mit der Krankenhaus-EDV 20 erfolgen. Bei einer Diskrepanz zwischen den ermittelten und den in der Krankenhaus-EDV 20 vorhandenen Medikationsdaten kann ein Alarm ausgelöst werden. In beiden Fällen kann das medizinische Fachpersonal eingreifen und die Fehlmedikation verhindern/stoppen.

Im Konkreten misst die Analysevorrichtung 1 das Raman-Spektrum, den Brechungsindex und vorzugsweise die Temperatur. Dabei erkennt die Analysevorrichtung 1 durch mathematische Methoden, ob und wenn, welche Raman-Banden in dem erhaltenen Raman-Spektrum enthalten sind und unterscheidet sie in Raman-aktive und Raman-inaktive Ergebnisse.

Im Fall, dass nur Raman-aktive Substanzen bzw. Raman-aktive Ergebnisse erkannt werden, werden die ermittelten Raman-Banden identifiziert und mit einer internen und/oder externen Raman-Datenbank verglichen. Dieser Vergleich ermöglicht eine Identifikation der Substanz/Fluid und/oder eine Konzentrationserkennung der Substanz/Fluid. Danach erfolgt unmittelbar eine Überprüfung der Ergebnisse des Brechungsindex zur Bestätigung mit einer internen und/oder externen Brechungsindex-Datenbank. Alternativ kann davor noch eine Gewichtung der Qualität des Raman-Spektrums durchgeführt werden. Danach erfolgt eine Datenfusion zu einem Endergebnis.

Für den Fall, dass beides, Raman-aktive und Raman-inaktive Substanzen festgestellt werden, ist das Vorgehen analog zur Raman-aktiven Substanz inklusive der Überprüfung des Brechungsindex zur Bestätigung mit einer internen und/oder externen Brechungsindex-Datenbank, aber jetzt beinhaltet der Schritt des Weiteren eine Klassifizierung auf NaCl und KCl. Jedoch wird bei der Überprüfung des Brechungsindex die Datenbankabfrage auf Raman-inaktive Substanzen wie NaCl und KCI erweitert.

Im Fall, dass nur Raman-inaktive Substanzen in dem Schritt der Erkennung der Raman-Banden im Raman-Spektrum festgestellt werden, erfolgt eine Einschränkung der Substanzen auf NaCl und KCI zur Klassifizierung. Nach einem Vergleich mit der Brechungsindex-Datenbank erfolgt die Qualifizierung und Quantifizierung der Substanz, was auch wieder zu einem Endergebnis führt.

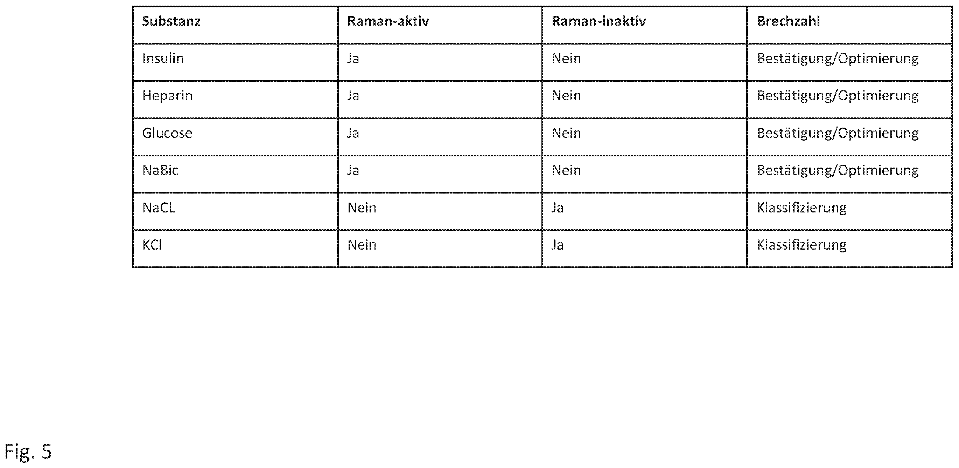

Die anliegende Fig. 5 gibt beispielhaft eine Tabelle von Medikamenten/Wirkstoffen wieder, wie sie in Krankenhäusern regelmäßig verabreicht werden. Hierzu zählen z.B. Natriumhydrogencarbonat (kurz: NaBic), Insulin und Glucose jeweils in wässriger Lösung. Erkennbar weisen alle drei genannten Substanzen eine Raman-Signatur auf, die prinzipiell eine Qualifizierung und Quantifizierung ermöglicht. Die Substanzen NaCl und KCI in wässriger Lösung weisen hingegen keine eindeutige Raman-Signatur auf. Durch das nicht vorhandene Raman Spektrum (bis auf die des Wassers) kann im Umkehrschluss darauf geschlossen werde, dass keine Raman-aktiven Substanzen vorliegen. Als Beispiel für Raman-inaktive Substanzen können hier NaCl und KCI aufgeführt werden . Wässrige NaCl und KCI Lösungen zeigen lediglich die Struktur von Wasser im Spektrum. Damit fallen sie aus der Menge der Raman-aktiven Substanzen heraus und bilden eine Teilmenge der Raman-inaktiven Substanzen.

Mittels Brechungsindex lassen sich anschließend alle Medikamente/Infusionslösungen, welche der Menge der Raman-inaktiven Substanzen angehören, eindeutig unterscheiden. Für die Medikamente/Infusionslösungen der Menge der Raman-aktiven Substanzen ist die Refraktometrie eine Bestätigung von Qualitätsbestimmung und eine Optimierung der Quantitätsbestimmung.

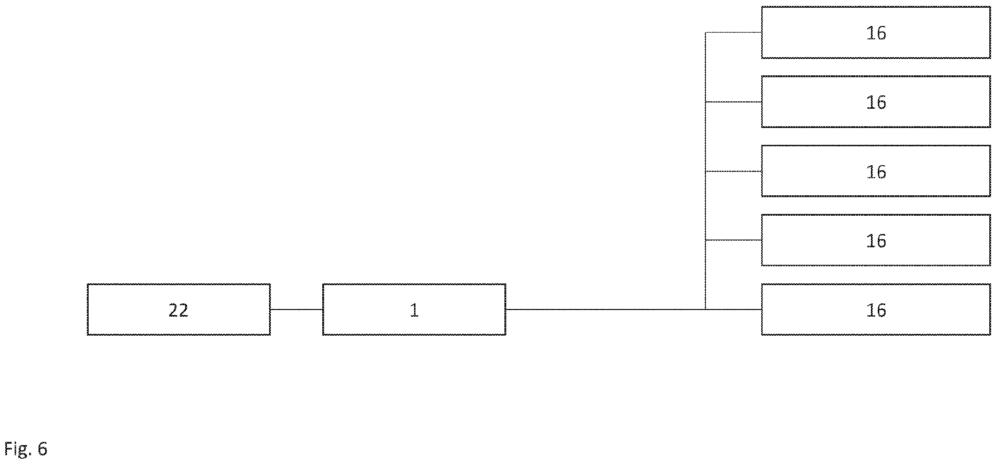

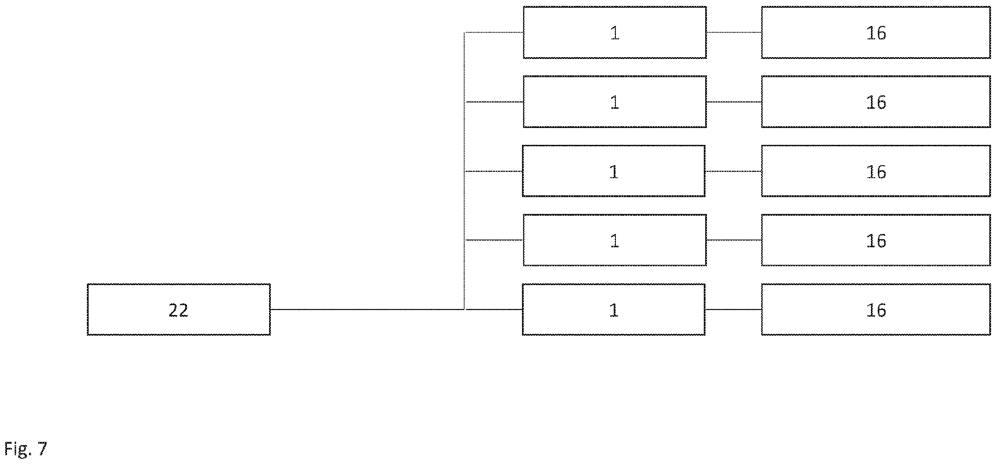

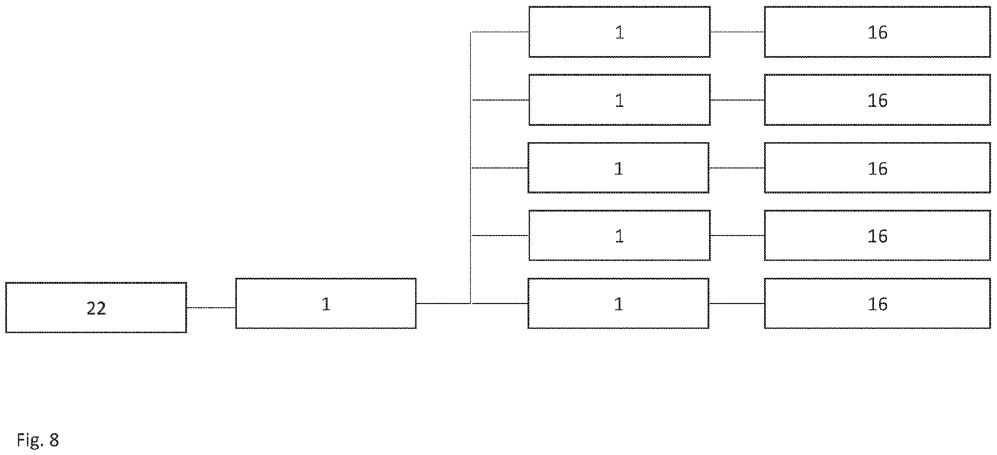

In den Figuren 6 bis 8 ist die Anordnung der Analysevorrichtung 1 in dem Fluidkreislauf schematisch dargestellt. Dabei kann die Analysevorrichtung 1 direkt vor dem Patienten 22 unmittelbar vorgeschaltet werden und/oder unmittelbar der Zuführeinrichtung 2 (z.B. einer einzigen Spritzenpumpe 16) nachgeschaltet werden. Im Fall von mehreren Zuführeinrichtungen kann jeder Zuführeinrichtung 2 jeweils eine Analysevorrichtung 1 nachgeschaltet sein

### Bezugsziffern:

- 1: Analysevorrichtung
- 2: Zuführeinrichtung
- 4: Raman-Spektrometer
- 4a: Lichtquelle
- 4b: Detektor
- 6: Refraktometer
- 6a: Lichtquelle
- 6b: Detektor
- 8: Temperatursensor
- 10: Recheneinheit Analysevorrichtung
- 12: Durchflussmesszelle
- 14: Interface
- 16: Spritzenpumpe
- 18: Recheneinheit Zuführeinheit
- 20: Krankenhaus EDV (KIS)
- 22: Patient

## Patentansprüche

1. Vorrichtung (1) zur Identifikation falscher/unbeabsichtigter Fluide, flüssiger Wirkstoffe und/oder flüssiger Wirkstoffkombinationen mit einer Recheneinheit (10), an die ein Raman-Spektrometer (4), ein Refraktometer (6) sowie eine medizinische Dateninfrastruktur (20) mit einer Datenbank angeschlossen oder anschließbar sind, wobei eine Anzahl von Datensätzen in der Datenbank abgelegt ist, die repräsentativ für vorbestimmte oder vorbestimmbare Fluide, flüssige Wirkstoffe und/oder flüssige Wirkstoffkombinationen sind,
wobei die Vorrichtung (1) dafür angepasst ist, ein ausgewähltes oder auswählbares Fluid, einen flüssigen Wirkstoff oder eine flüssige Wirkstoffkombination einer Raman-Spektroskopie zu unterziehen und so ein erstes (Vor-) Ergebnis zu erhalten; und
die Vorrichtung (1) ferner dafür angepasst ist, parallel und/oder seriell dazu das ausgewählte Fluid, den flüssigen Wirkstoff oder die flüssige Wirkstoffkombination einer Brechungsindex-Messung zu unterziehen und so ein zweites (Vor-) Ergebnis zu erhalten;
wobei Raman-aktive Substanzen durch einen Vergleich des ersten (Vor-) Ergebnisses mit einer internen und/oder externen Raman-Datenbank identifiziert sind und Raman-inaktive Substanzen durch einen Vergleich des zweiten (Vor-) Ergebnisses mit einer internen und/oder externen Brechungsindex-Datenbank identifiziert sind;
**dadurch gekennzeichnet, dass**
die Recheneinheit (10) dafür angepasst ist, durch das dabei erhaltene erste (Vor-) Ergebnis das ausgewählte Fluid, den flüssigen Wirkstoff oder die flüssige Wirkstoffkombination als Raman-aktiv oder Raman-inaktiv zu erkennen,
wobei die Recheneinheit (10) ferner dafür angepasst ist,
(a) im Fall einer erkannten Raman-Aktivität eine Plausibilitätsüberprüfung des ersten (Vor-) Ergebnisses durch die Überprüfung des zweiten (Vor-) Ergebnisses mit der internen und/oder externen Brechungsindex-Datenbank durchzuführen, und danach, abhängig von einem Ergebnis der Plausibilitätsüberprüfung, entweder (i) nur Raman-aktive Substanzen oder (ii) sowohl Raman-aktive als auch Raman-inaktive Substanzen als das Endergebnis anzunehmen;
(b) im Fall einer erkannten Raman-Inaktivität (iii) nur Raman-inaktive Substanzen als das Endergebnis anzunehmen;
wobei die Recheneinheit (10) schließlich dafür angepasst ist, das Endergebnis mit den in der Datenbank abgelegten Datensätzen zu vergleichen, wobei die Datenbankabfrage bei (ii) eine erweiterte Datenbankabfrage auf Raman-inaktive Substanzen umfasst, um so ein falsches/unbeabsichtigtes Fluid, flüssigen Wirkstoff oder flüssige Wirkstoffkombination zu identifizieren und entsprechend einen Alarm zu bewirken.

2. Vorrichtung (1) nach Anspruch 1, **dadurch gekennzeichnet, dass** die Vorrichtung ein Gehäuse aufweist, das die Recheneinheit (10), das Raman-Spektrometer (4), das Refraktometer (6) und einen Temperatursensor (8) beinhaltet, die durch Datenleitungen zum Austausch von Informationen verbunden sind, sowie eine Durchflussmesszelle (12) durch die das zu identifizierende Fluid strömt.

3. Vorrichtung (1) nach Anspruch 1, **dadurch gekennzeichnet, dass** die Recheneinheit (10) dafür angepasst und vorgesehen ist eine Statusmeldung an ein Bedienelement, vorzugsweise einen Touchscreen (berührungsempfindlicher Bildschirm), auszugeben.

4. Rechner-basiertes Verfahren zur Identifikation falscher/unbeabsichtigter Fluide, flüssiger Wirkstoffe und/oder flüssiger Wirkstoffkombinationen mit den folgenden Verfahrensschritten:
- Unterziehen eines ausgewählten oder auswählbaren Fluids, flüssigen Wirkstoffs oder einer flüssigen Wirkstoffkombination einer Raman-Spektroskopie für den Erhalt eines ersten (Vor-) Ergebnisses,
- Unterziehen des ausgewählten Fluids, flüssigen Wirkstoffs oder flüssigen Wirkstoffkombination einer Brechungsindex-Messung für den Erhalt eines zweiten (Vor-) Ergebnisses,
- Identifizieren Raman-aktiver Substanzen durch einen Vergleich des ersten (Vor-) Ergebnisses mit einer internen und/oder externen Raman-Datenbank; und parallel und/oder seriell dazu,
- Identifizieren Raman-inaktiver Substanzen durch einen Vergleich des zweiten (Vor-) Ergebnisses mit einer internen und/oder externen Brechungsindex-Datenbank;
**dadurch gekennzeichnet, dass** eine Recheneinheit (10) folgende Schritte durchführt:
- Erkennen des ausgewählten Fluids, flüssigen Wirkstoffs oder flüssigen Wirkstoffkombination als Raman-aktiv oder Raman-inaktiv auf Basis des ersten (Vor-) Ergebnisses,
- (a) im Fall einer erkannten Raman-Aktivität, Durchführen einer Plausibilitätsüberprüfung des ersten (Vor-) Ergebnisses durch die Überprüfung des zweiten (Vor-) Ergebnisses mit der internen und/oder externen Brechungsindex-Datenbank, und danach abhängig von einem Ergebnis der Plausibilitätsüberprüfung, Annehmen (i) nur Raman-aktiver Substanzen oder (ii) sowohl Raman-aktiver als auch Raman-inaktiver Substanzen als das Endergebnis; oder
- (b) im Fall einer erkannten Raman-Inaktivität, Annehmen (iii) nur Raman-inaktiver Substanzen als das Endergebnis; und
- Vergleichen des Endergebnisses mit den in der Datenbank abgelegten Datensätzen, wobei die Datenbankabfrage bei (ii) eine erweiterte Datenbankabfrage auf Raman-inaktive Substanzen umfasst, um so ein falsches/unbeabsichtigtes Fluid, flüssigen Wirkstoff oder flüssige Wirkstoffkombination zu identifizieren und entsprechend einen Alarm zu bewirken.

5. Verfahren nach Anspruch 4, **dadurch gekennzeichnet, dass** ein Kalibrationsschritt vor der Spektroskopie, vorzugsweise mit einer chemisch stabilen Flüssigkeit, stattfindet zur Kalibrierung der Wellenlänge und Intensität des Raman-Spektrometers und/oder des Refraktometers.

6. Verfahren nach Anspruch 4, **dadurch gekennzeichnet, dass** die Güte der Raman-Messdaten ermittelt wird.

## Claims

1. A device (1) for identifying incorrect/unintended fluids, liquid active substances and/or liquid active substance combinations, comprising a computing unit (10) to which a Raman spectrometer (4), a refractometer (6) and a medical data infrastructure (20) with a database are connected or connectable, wherein a number of data sets is stored in the database which are representative of predetermined or predeterminable fluids, liquid active substances and/or liquid active substance combinations,
wherein the device (1) is adapted to subject a selected or selectable fluid, a liquid active substance or a liquid active substance combination to a Raman spectroscopy and thus to obtain a first (preliminary) result; and
the device (1) is additionally adapted to subject the selected fluid, the liquid active substance or the liquid active substance combination to a refractive index measurement in parallel and/or in series with this and thus to obtain a second (preliminary) result;
wherein Raman-active substances are identified by comparing the first (preliminary) result with an internal and/or external Raman database
and Raman-inactive substances are identified by comparing the second (preliminary) result with an internal and/or external refractive index database;
**characterized in that**
the computing unit (10) is adapted to recognize the selected fluid, the liquid active substance or the liquid active substance combination as Raman-active or Raman-inactive via the first (preliminary) result obtained in the process,
wherein the computing unit (10) is further adapted to
(a) in the case of detected Raman activity, to perform a plausibility check of the first (preliminary) result by checking the second (preliminary) result against the internal and/or external refractive index database, and then, depending on a result of the plausibility check, either (i) to accept only Raman-active substances, or (ii) both Raman-active and Raman-inactive substances as the final result;
(b) in the case of detected Raman inactivity (iii) only Raman-inactive substances as the final result;
wherein the computing unit (10) is finally adapted to compare the final result with the data sets stored in the database, wherein the database query in (ii) comprises an extended database query for Raman-inactive substances in order to identify a false/unintended fluid, liquid active substance or liquid active substance combination and to trigger an alarm accordingly.

2. The device (1) according to claim 1, **characterized in that** the device comprises a housing comprising the computing unit (10), the Raman spectrometer (4), the refractometer (6), and a temperature sensor (8) which are connected with each other by data lines for the exchange of information, and a flow measuring cell (12) through which the fluid to be identified flows.

3. The device (1) according to claim 1, **characterized in that** the computing unit (10) is adapted and provided so as to output a status notification to an operating element, preferably a touch screen (touch-sensitive screen).

4. A computer-based method for identifying incorrect/unintended fluids, liquid active substances and/or liquid active substance combinations, comprising the following method steps:
- subjecting a selected or selectable fluid, liquid active substance or liquid active substance combination to a Raman spectroscopy for obtaining a first (preliminary) result,
- subjecting the selected fluid, liquid active substances or liquid active substance combination to a refractive index measurement for obtaining a second (preliminary) result,
- identifying Raman-active substances by comparing the first (preliminary) result with an internal and/or external Raman database; and in parallel and/or in series thereto,
- identifying Raman-inactive substances by comparing the second (preliminary) result with an internal and/or external refractive index database;
**characterized in that** a computing unit (10) performs the following steps:
- detecting the selected fluid, liquid active substances or liquid active substance combination as Raman-active or Raman-inactive on the basis of the first (preliminary) result,
- (a) in the case of detected Raman activity, performing a plausibility check of the first (preliminary) result by checking the second (preliminary) result against the internal and/or external refractive index database, and then, depending on the result of the plausibility check, accepting (i) only Raman-active substances or (ii) both Raman-active and Raman-inactive substances as the final result; or
- (b) in the case of detected Raman inactivity, accepting (iii) only Raman-inactive substances as the final result; and
comparing the final result with the data sets stored in the database, wherein the database query in (ii) comprises an extended database query for Raman-inactive substances in order to identify a false/unintended fluid, liquid active substance or liquid active substance combination and to trigger an alarm accordingly.

5. The method according to claim 4, **characterized in that** a calibration step for calibrating the wavelength and the intensity of the Raman spectrometer and/or of the refractometer is performed prior to the spectroscopy, preferably with a chemically stable fluid.

6. The method according to claim 4, **characterized in that** the quality of the Raman measurement data is determined.

## Revendications

1. Dispositif (1) d'identification de fluides, de substances actives liquides et/ou de combinaisons de substances actives liquides incorrects/non voulus avec une unité de calcul (10) à laquelle un spectromètre Raman (4), un réfractomètre (6) ainsi qu'une infrastructure de données (20) médicale avec une base de données sont ou peuvent être raccordés, dans lequel un nombre de jeux de données est enregistré dans la base de données, jeux qui sont représentatifs de fluides, substances actives liquides et/ou combinaisons de substances actives liquides prédéterminés ou pouvant être prédéterminés,
dans lequel le dispositif (1) est adapté afin de soumettre un fluide, une substance active liquide ou une combinaison de substances actives liquides sélectionné ou pouvant être sélectionné à une spectroscopie Raman et d'obtenir ainsi un premier résultat (préliminaire) ; et le dispositif (1) est de plus adapté afin de soumettre en parallèle et/ou en série le fluide, la substance active liquide ou la combinaison de substances actives liquides sélectionné à une mesure d'indice de réfraction et d'obtenir ainsi un second résultat (préliminaire) ;
dans lequel des substances présentant une activité Raman sont identifiées en comparant le premier résultat (préliminaire) à une base de données Raman interne et/ou externe et des substances présentant une inactivité Raman sont identifiées en comparant le second résultat (préliminaire) à une base de données d'indice de réfraction interne et/ou externe ;
**caractérisé en ce que**
l'unité de calcul (10) est adaptée pour que le premier résultat (préliminaire) obtenu puisse détecter que le fluide, la substance active liquide ou la combinaison de substances actives liquides sélectionné présente une activité Raman et/ou une inactivité Raman,
dans lequel l'unité de calcul (10) est de plus adaptée afin de
(a) réaliser dans le cas d'une activité Raman détectée une vérification de plausibilité du premier résultat (préliminaire) en vérifiant le second résultat (préliminaire) avec la base de données d'indice de réfraction interne et/ou externe, et ensuite en fonction d'un résultat de la vérification de plausibilité, (i) considérer uniquement des substances présentant une activité Raman ou (ii) non seulement des substances présentant une activité Raman mais aussi une inactivité Raman comme résultat final ;
(b) considérer dans le cas d'une inactivité Raman (iii) détectée uniquement des substances présentant une inactivité Raman comme résultat final ;
dans lequel l'unité de calcul (10) est enfin adaptée afin de comparer le résultat final aux jeux de données enregistrés dans la base de données, dans lequel l'interrogation de base de données comprend pour (ii) une interrogation de base de données élargie à des substances présentant une inactivité Raman afin d'identifier ainsi un fluide, une substance active liquide ou une combinaison de substances actives liquides incorrect et/ou non voulu et de provoquer en conséquence une alarme.

2. Dispositif (1) selon la revendication 1, **caractérisé en ce que** le dispositif présente un boîtier qui contient l'unité de calcul (10), le spectromètre Raman (4), le réfractomètre (6) et un capteur de température (8) qui sont reliés par des lignes de données pour l'échange d'informations, ainsi qu'une cellule de mesure de débit (12) par laquelle s'écoule le fluide à identifier.

3. Dispositif (1) selon la revendication 1, **caractérisé en ce que** l'unité de calcul (10) est adaptée et prévue afin de d'émettre un message de statut au niveau d'un élément de commande, de préférence un écran tactile (écran sensible au toucher).

4. Procédé basé sur un ordinateur pour l'identification de fluides, de substances actives liquides et/ou de combinaisons de substances actives liquides incorrects et/ou non voulus avec les étapes de procédé suivantes :
- la soumission d'un fluide, d'une substance active liquide ou d'une combinaison de substances actives liquides sélectionné ou pouvant être sélectionné à une spectroscopie Raman pour l'obtention d'un premier résultat (préliminaire),
- la soumission du fluide, de la substance active liquide ou de la combinaison de substances actives liquides sélectionné à une mesure d'indice de réfraction pour l'obtention d'un second résultat (préliminaire),
- l'identification de substances présentant une activité Raman en comparant le premier résultat (préliminaire) à une base de données Raman interne et/ou externe ; et en plus en parallèle et/ou en série,
- l'identification de substances présentant une inactivité Raman en comparant le second résultat (préliminaire) à une base de données d'indice de réfraction interne et/ou externe ;
**caractérisé en ce qu'**une unité de calcul (10) réalise les étapes suivantes :
- la détection du fluide, de la substance active liquide ou de la combinaison de substances actives liquides sélectionné comme présentant une activité Raman ou une inactivité Raman sur la base du premier résultat (préliminaire),
- (a) dans le cas d'une activité Raman détectée, la réalisation d'une vérification de plausibilité du premier résultat (préliminaire) en vérifiant le second résultat (préliminaire) dans la base de données d'indice de réfraction interne et/ou externe, et ensuite en fonction d'un résultat de la vérification de plausibilité, la considération (i) uniquement des substances présentant une inactivité Raman ou (ii) non seulement présentant une activité Raman mais aussi une inactivité Raman comme résultat final ; ou
- (b) dans le cas d'une inactivité Raman détectée, la considération (iii) uniquement des substances présentant une inactivité Raman comme résultat final ; et
- la comparaison du résultat final aux jeux de données enregistrés dans la base de données, dans lequel l'interrogation de base de données comprend pour (ii) une interrogation de base de données élargie à des substances présentant une inactivité Raman afin d'identifier ainsi un fluide, une substance active liquide ou une combinaison de substances actives liquides incorrect et/ou non voulu et de provoquer en conséquence une alarme.

5. Procédé selon la revendication 4, **caractérisé en ce qu'**une étape d'étalonnage a lieu avant la spectroscopie, de préférence avec un liquide stable chimiquement, pour l'étalonnage de la longueur d'onde et l'intensité du spectromètre Raman et/ou du réfractomètre.

6. Procédé selon la revendication 4, **caractérisé en ce que** la qualité des données de mesure Raman est déterminée.
